# EUROPEAN PATENT SPECIFICATION

(11) **EP 2 177 432 B1**
(45) Date of publication and mention of the grant of the patent: **09.01.2013**
(21) Application number: 07866908.2
(22) Date of filing: 11.07.2007
(51) Int. Cl.: B64C 13/00, B64D 45/00, B64D 7/00, F41G 1/40

(54) **AIRCRAFT WITH AN INTEGRATED RADIOELECTRONIC SYSTEM**
LUFTFAHRZEUG MIT EINEM INTEGRIERTEN RADIOELEKTRONISCHEN SYSTEM
AVION A SYSTEME RADIOELECTRONIQUE INTEGRE

(43) Date of publication of application: 21.04.2010
(73) Proprietor: Otkrytoe Aktsionernoe Obschestvo 'Opytno-Konstruktorskoe Byuro IM. A.S. Yakovleva', Moscow 125315 (RU); Federalnoe Gosudarstvennoe Uchrezhdenie "Federalnoe Agentsvo Po Pravovoi Zaschite Rezultatov Intelektualnoi Deyatelnosti, Moscow 125040 (RU)
(72) Inventor: DEMCHENKO, Oleg Fedorovich, 129272 Moscow (RU); DOLZHENKOV, Nikolai Nikolaevich, 125083 Moscow (RU); POPOVICH, Konstantin Fedorovich, 117296 Moscow (RU); SHKOLIN, Valdimir Petrovich, 125195 Moscow (RU); GURTOVOI, Arkady Iosifovich, 125057 Moscow (RU); KODOLA, Valery Grigorievich, 141170 Moskovskaya obl. (RU); KALUGIN, Vyacheslav Georgievich, 115573 Moscow (RU); OBROSOV, Kirill Veniaminovich, 125057 Moscow (RU)
(74) Representative: Andrae, Steffen
(86) International application number: PCT/RU2007/000380
(87) International publication number: WO 2009/008760

(56) References cited:
- DE-A1- 3 124 726
- GB-A- 1 465 548
- RU-A- 94 024 245
- RU-C1- 2 239 768
- RU-C1- 2 252 900

## Description

### FIELD OF THE INVENTION

The present invention relates to aeronautical engineering and is intended for use when manufacturing aircrafts, in particular those having a multi-purpose integrated electronic complex.

### BACKGROUND OF THE INVENTION

There has been known an aircraft comprising, inter alia, a fuselage, a wing, a tail unit, a landing gear, main and auxiliary power plants, a system for controlling a general-purpose aircraft equipment having two automatic control loops structurally embodied in the main and reserve conversion and calculation units that are connected to actuators through a monitoring and control unit. A manual control loop is provided with control panels, an enunciator panel and a central signal light. A control system is connected via a multiplexer channel with a set of on-board digital computers, electronic control systems of port and starboard engines, a recording and monitoring system, a guidance and landing equipment and a complex control system. Said control system is connected through code communication lines with a fuel control and monitoring system, a voice message equipment, a complex electron display system and said auxiliary power plant (RU 2263044 C1, B 64 C 13/ 00, October 27, 2005).

The drawback to the known aircraft consists in a low efficiency of its electronic complex.

The closest prior art to be used for the claimed invention is a light multi-purpose aircraft at enhanced maneuvering properties comprising, a fuselage, a wing, a fin assembly, a landing gear, a power plant and a controlling integrated complex consisting of an information exchange system, an on-board digital computer system for controlling flight and training and combat operations, an external storage and an information input system, a radio inertial navigation and landing system, a complex aircraft control system with consoles arranged in a pilot and operator cockpit, an armament control system with consoles arranged in a pilot and operator cockpit, a complex system for electronic display, control and sighting, an emergency warning board, a two-fold redundant aircraft equipment control system, an on-board objective monitoring system, a speech information control system, an electric power supply system, internal and external lighting facilities, an emergency escape complex system, a two-fold redundant power plant control system. In doing so, the information exchange system is divided into three independent multiplexer information exchange channels, radial couplings are made between the computing system and the aircraft equipment control system and also between the complex system for electronic display, control and sighting and the complex aircraft control system (Patent RU 2252899 C1, B64C 13/00, Priority of May 20, 2004, which discloses all the features of the preamble of claim 1)

The drawback to the prior art apparatus consists in insufficient efficiency of its electronic complex.

### SUMMARY OF THE INVENTION

It is an object of the present invention to create an aircraft with an electronic complex of improved efficiency.

The above object has been achieved in the fact that the proposed multi-purpose integrated electronic complex of the aircraft comprises an on-board radar, an optoelectronic vision-sight system containing an automatic system for caging a head mirror; said automatic system fixes orientation of visual fields of laser radar, thermal vision and TV systems when a sight line transits to the upper hemisphere and decages thereof during transition to the lower hemisphere. The head mirror is located in the bottom casing of the optoelectronic vision-sight system.

A periscopic system for bringing visual fields of the optoelectronic vision-sight system to the upper hemisphere is attached in a common fastening device in addition to receive-radiating units of the on-board radar and the optoelectronic vision-sight system.

The periscopic system comprises an on-off (for operation in the upper or lower hemisphere) deflector subsystem. In response to a signal (to be received from on-board digital computers) of transiting a sight line to the upper hemisphere, a lower (head) mirror of the periscopic system is automatically set in a position for operation of the optoelectronic vision-sight system in the upper hemisphere; in doing so, visual fields of the optoelectronic vision-sight system are flung to the upper sight element of the periscopic system.

The periscopic system comprises the upper sight element in the form of a deflector fastened in a gimbal suspension for controlling the orientation of visual fields in the upper hemisphere.

Signals of transiting a sight line from the lower hemisphere to the upper hemisphere and from the upper hemisphere to the lower hemisphere come from the output of an information control system (for example, the on-board radar and the on-board digital computer) to the input of the on-off deflector subsystem.

Signals of controlling the orientation of visual fields of the optoelectronic system come from the output of an executive control system to drives of a head mirror of the optoelectronic system and to drives of the upper sight element of the periscopic system.

Viewing of the upper hemisphere of the optoelectronic vision-sight system is carried out by means of a mirror swinging in two mutually perpendicular planes, at the expense of fastening the mirror in a gimbal suspension.

A deflector is closed by a cap which is transparent in the optical wavelength band.

Operation of the complex, owing to integration of five channels (an on-board radar, a laser-radar system, a TV system, a thermal vision system, a laser altimeter), is performed both by day and at night, in any meteorological conditions, at any theatre of operations (including mountain conditions) when damaging both ground and airborne targets.

### BRIEF DESCRIPTION OF THE DRAWINGS

The present invention is explained by the following drawings in which:

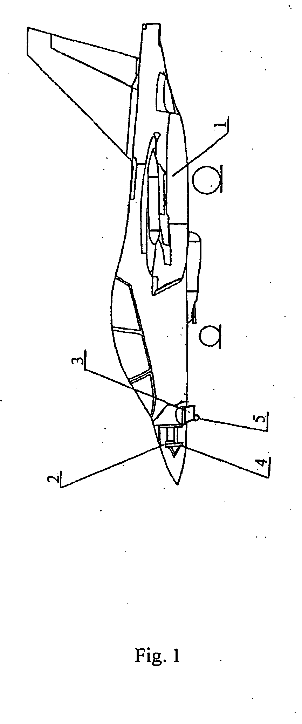

FIG. 1 shows a general view of the aircraft with a multi-purpose integrated electronic complex installed in the nose section of the aircraft;

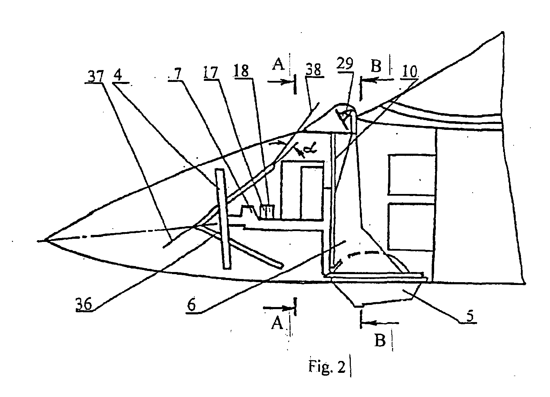

FIG. 2 shows the multi-purpose integrated electronic complex and a device for its installation in the aircraft, said device enabling serviceability of the multi-purpose integrated electronic complex;

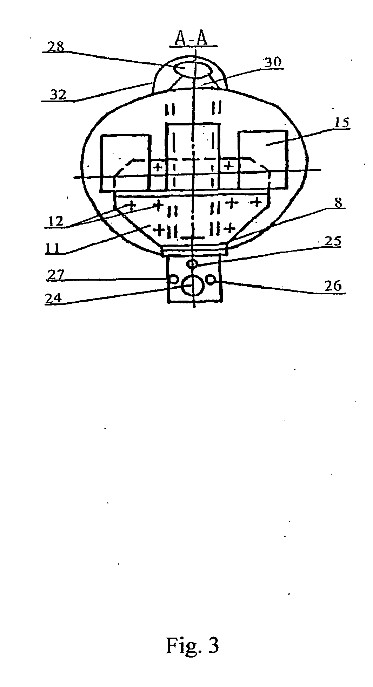

FIG. 3 shows section A-A of the device depicted in FIG. 2;

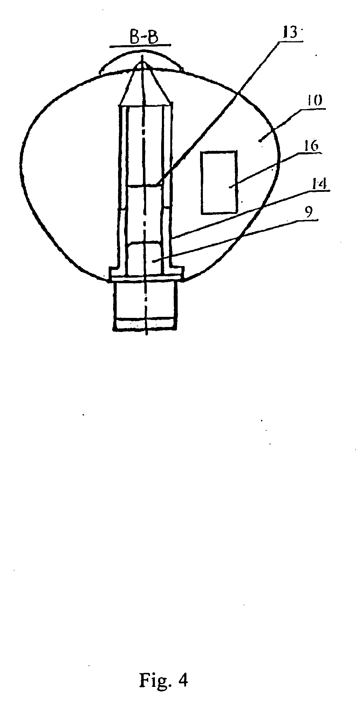

FIG. 4 shows section B-B of the device depicted in FIG. 2;

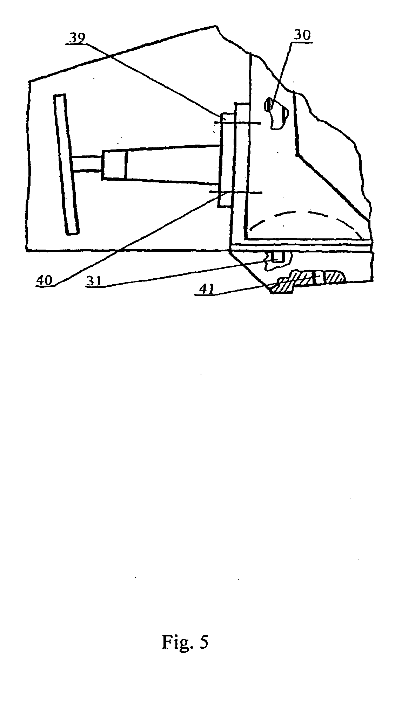

FIG. 5 shows a unit for fastening an aerial of the on-board radar.

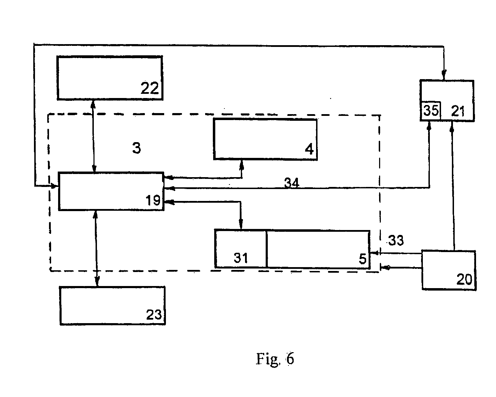

FIG. 6 shows a diagram of interaction of elements of the multi-purpose integrated electronic complex between each other and main parts of an on-board electronic equipment complex.

### DETAILED DESCRIPTION OF THE INVENTION

In the aircraft 1, in its nose section 2, there is installed a multi-purpose integrated electronic complex 3 containing an on-board radar 4 and an optoelectronic vision-sight system 5.

The on-board radar 4 and the optoelectronic vision-sight system 5 are attached in a common fastening device 6 by means of, for example, a hinge 7 and a flange 8, respectively, and fastening elements 9 (bolts, nuts, washers, an so on).

The fastening device 6 is attached, for example, on a frame 10 of the aircraft 1 by means of, for example, a flange 11 and fastening elements 12.

The frame 10 has a slot 13 for arranging, for example, ribs 14 with flanges 8 of the fastening device 6.

Units enabling operation of the on-board radar 4 and the optoelectronic vision-sight system 5 may be mounted in order to make it possible to rotate an aerial, partially on the fastening device 6 (units 15), partially outside the fastening device 6, for example, on the frame 10 (units 16).

Rotation of an aerial of the on-board radar 4 by an azimuth angle and an angle of elevation, for example in the hinge 7, is carried out by means of, for example, electric motors 17 and 18, respectively.

The on-board radar 4 and the optoelectronic vision-sight system 5 are interconnected by units 15 and 16 of an on-board digital computer 19, by electric couplings with a control panel 20, a multi-purpose digital display 21, an armament control system 22, a control complex 23 of the aircraft 1 and a power source (not shown in the drawings).

The optoelectronic vision-sight system 5 incorporates a laser-radar unit 24 (with a target indicator operating at A=1.06 µm, a laser-radar system operating at A=1.54 µm and an altimeter), a narrow-field thermal vision system 25, a wide-field thermal vision camera 26 and a TV camera 27, as well as an upper sight element - deflector (for example, a mirror) 28, a gimbal suspension 29, a periscopic system 30 with a lower sight element - a head mirror (not shown in the drawings) inside a casing of the optoelectronic vision-sight system 5, a system of automatic caging 31. The deflector 28 is arranged beneath a cap 32.

Switching of the optoelectronic vision-sight system 5 from a vision-sight mode to a low-altitude flight mode is carried out by a pilot from the control panel 20 via a communication line 33.

The optoelectronic vision-sight system 5 transmits, through the on-board digital computer 19 and a communication line 34, information on targets to represent this information on a part 35 of the multi-purpose digital display 21. The pilot defines the sequence of attacking targets and, using the control panel 20, issues an instruction to attack these targets. The attack may be carried out in automatic mode via the on-board digital computer 19, given a relevant program of target priorities.

The sizes and appearance of a special fastening device 6 are determined by overall dimensions of the on-board radar 4 and the optoelectronic vision-sight system 5 and also by their operating conditions.

For instance, when an aerial 36 of the on-board radar 4 deviates by an azimuth angle and an angle of elevation (usually 50-60°), a plane passing through a surface 37 of the aerial 36 should make a reserve angle (a = -10°) with a plane 38 that should not intersect the optoelectronic vision-sight system 5 or, e.g. the units 15 on the casing of the on-board radar 4, or, e.g. the frame 10, in order not to distort the radiation pattern of the aerial 36 of the on-board radar 4.

In addition, if the fastening device 6 intersects, for example the frame 10, a width of the fastening device 6 must be made minimal in order it can enter inward the optoelectronic vision-sight system 5 with a small gap; in doing so, the slot 13 will be minimal and will not loose a load-bearing fuselage structure of the aircraft 1.

Traditionally, the on-board radar 4 with the aerial, units, devices and a drive is arranged in a single casing; power supply sources and the On-board digital computer are arranged separately.

In order to simplify the structure, decrease the weight of the fastening device 6 and, hence, that of the of the entire aircraft 1, and also to diminish its overall dimensions and enlarge the aerial turning angles, it is proposed to arrange on the fastening device 6 a minimal amount of elements constituting the on-board radar 4, for example, electric motors 17 and 18 that rotate the aerial 36 by an angle of elevation and an azimuth angle respectively (with an electric drive, for instance), and also a number of units 15 (for example, a receiver, some sensors), while arranging the remaining elements constituting the on-board radar 4, for example a transmitter, the unit 16, outside the fastening device 6.

With the aim of decrease a weight, the fastening device 6 comprises a device for rotating the aerial 36 in the form of, for example, a hinge 7.

Should the need arise, however, the aerial 36 of the on-board radar 4 may have its fastening part, for example, a flange 39 and fastening elements 40, whereby the aerial 36 of the on-board radar 4 with the hinge 7 is mounted rigidly on the fastening device 6.

This will allow preservation of universality of the aerial 36 of the on-board radar 4, i.e. the possibility to use thereof with any aircrafts, while only changing configuration of the fastening device 6 according to a particular aircraft.

The following channels of the optoelectronic vision-sight system 5: a laser channel 24, a TV channel 27, a narrow-field thermal vision channel 25 and a wide-field thermal vision channel 26 are arranged in a forward direction along the aircraft axis with the possibility of scanning in azimuth and elevation planes, whereas a laser altimeter 41 is pointing downwards, perpendicular to the aircraft fore-and-aft axis.

The multi-purpose integrated electronic complex 3 operates as follows.

To fight against airborne targets and ground targets both protected and non protected by antiaircraft defense means, it is advisable to make use of both the on-board radar 4 and the optoelectronic vision-sight system 5 of the multi-purpose integrated electronic complex 3.

The on-board radar 4 has a greater ground target detection range than the optoelectronic vision-sight system 5 (> 20 km), detects targets 24 hours a day and is all-weather. Having detected targets, the on-board radar 4 generates their spots on the multi-purpose digital display 21. At the same time, the on-board digital computer 19 helps to rank the targets and assign their priorities, for instance: 0 - a marching combat materiel; 1 - a quickly moving target; 2 - a slowly moving target; 3 - a slowly moving target with a low EPR.

However, a target identification is hampered because of a low resolution of the on-board radar 4 as to coverage (- 6 m) and angle (-5°).

Information on the detected targets comes through an additional communication line 34 to a part 35 of the multi-purpose digital display 21 intended for information on targets of the optoelectronic vision-sight system 5.

The pilot assesses this information and, using the control panel 20, selects the sequence of attacking targets yet before flying up to them, aims the aircraft at a target and, when the target enters the detection zone, a TV-system 27 and/or a wide-field thermal vision system 26 recognizes the target preliminarily.

In doing so, a detection range by a TV channel 27 at night or by a wide-field thermal vision channel 26 by day is 8-10 km.

The design of the optoelectronic vision-sight system 5 has considerable draw angles: from +8-10° to -135° in the fore-and-aft vertical plane (i.e. it may accompany a guided weapon) and ±45° in the azimuth plane (±90° when the optoelectronic vision-sight system is arranged on a turret).

Within the draw angles, a narrow-field thermal vision system has a visual field 4°x4°; whereas scanning fields of a laser radar system of a laser radar unit 24 may be formed depending on a problem to be solved.

When attacking, for example, small-dimension targets under instructions from the on-board radar 4, or the TV-system 27, or the wide-field thermal vision system 26, a laser radar system of the laser radar unit 24 forms a microraster within the limits of 1° x 1° visual field, and a complex signal processing using a narrow-field thermal vision system 25 and a laser radar system of the laser radar unit 24 enables final target identification and decision to attack. The system switches to an automatic target tracking mode and, while illuminating a target with the beam of a laser target indicator of the laser radar unit 24, affords guidance of a guided weapon with laser seekers (a 6-8 km range) using an armament control system 22. Resolution of a laser radar system of the unit 24 is up to 0.3 m as to coverage and -1° as to angle.

Owing to the fact that the on-board radar 4 and the optoelectronic vision-sight system 5 are mounted rigidly in a common fastening device 6, there is a lesser aiming error, a greater reliability of operation of the complex and a higher probability of target destruction, including from the first target run.

When the aircraft performs a combat manoeuver while running-in, a target can not leave a pilot visual field, since a target, through the upper deflector 28 of the periscopic system 30, is observed by the optoelectronic vision-sight system 5 in upper and lower hemispheres, thus allowing the pilot to run-in quickly and accurately.

In doing so, the automatic caging system 31 of the head mirror of the periscopic system 30 fixes orientation of visual fields of the laser radar unit 24, the TV-system 27, the narrow-field thermal vision system 25 and the wide-field thermal vision system 26 for the operation of the optoelectronic vision-sight system in the upper and, through the periscopic system 30, puts visual fields of the optoelectronic vision-sight system 5 into the upper hemisphere through the deflector 28, and signals of transiting a sight line to the upper hemisphere and signals of controlling the orientation of visual fields come from the output of an information control system, for example from the on-board radar 4 and the on-board digital computer 19.

To overcome air defenses, it is advisable to use a low-altitude flight, since air defense means (anti-aircraft rocket systems, anti-aircraft artillery systems), because of radar jamming, fail to detect an aircraft flying at a low height.

The on-board radar 4 may, in the best case, provide the flight not lower than 50 m (because of ground noises). In addition, it fails to see such obstacles as ground masts, boiler house chimneys, power line wires, etc. Because -of this, a low-altitude flight using the on-board radar 4 is not sufficiently reliable.

When ensuring safety of extreme low-altitude flights (-30 m) and correction of a navigation system, the laser radar system 24 forms an azimuth scanning in the front hemisphere in the range of angles ±15° with a subsequent automatic analysis of the underlying surface in a 2-3 km width area, thus ensuring detection of all obstacles (large objects, masts, wires, cables, etc).

The best results of a low-altitude flight may be obtained by a combined operation of the on-board radar 4 and the optoelectronic vision-sight system 5.

The on-board radar 4 views the routes at long ranges, detects passages, for example in a mountainous area, and the optoelectronic vision-sight system 5 views an accurate profile in the contemplated direction at a range of up to 5 km, detects not only towers, chimneys, power line supports but also wires (at a range of ~ 1 km) and prolongs a safety low-altitude flight trajectory by superimposing thereof on images formed by the TV-system 27 and the wide-field thermal vision system 26 and presented to the pilot on the display 35.

When the occasion requires provision of only a low-altitude flight, a laser target indicator (A=1.54 µm) of the laser-radar unit 24 and the narrow-field thermal vision system 25 are not in use and may be disconnected by the pilot through the control panel 20 and the communication line 33.

The fight against airborne targets is carried out by means of the on-board radar 4 of the multi-purpose integrated electronic complex 3 in both short and long-distance air combat, in the usual fashion.

In a short-distance air combat, use is made of the operation of the optoelectronic vision-sight system 5 of the multi-purpose integrated electronic complex 3. A working principle is similar to that described above. The difference is in that information on an airborne target comes, basically, through a system for viewing the upper hemisphere, i.e. a mirror 28 of the periscopic system 30, to the optoelectronic vision-sight system 5 (to the same laser channel 24, TV channel 27, narrow-field thermal vision channel 25 and wide-field thermal vision channel 26).

In such a manner the proposed multi-purpose integrated electronic complex 3 affords an efficient performance of combat missions in the fight against enemy's airborne and ground targets on a 24-hour basis, in any meteorological conditions, at any theatres of operations.

The advantages of the proposed multi-purpose integrated electronic complex 3 consist in its possibility to ensure landing of the aircraft on technically unprepared areas thanks to a three-dimensional image of the locality in front of the aircraft (is provided for by a laser radar system), whereas a high resolution of the optoelectronic vision-sight system 5 makes possible correction of a navigation system to be carried out in intermediate points of the route in the most accurate way as compared with all available vision-sight systems.

All the aforesaid considerations are beneficial for improvements in the combat efficiency of the aircraft 1.

The present invention may be used in aeronautical engineering when manufacturing aircrafts with a multi-purpose integrated electronic complex.

## Claims

1. An aircraft (1) at enhanced maneuvering properties comprising a fuselage, a wing, a fin assembly, a landing gear, a power plant, a multi-purpose integrated electronic complex (3), incorporating an information exchange system, a set of on-board digital computers (19) for controlling flight and training and combat operations, an external storage and an information input system, a radio inertial navigation and landing system, a complex aircraft control system, an armament control system, a complex system for electronic display, control and sighting, an emergency warning board, a general-purpose aircraft equipment control system, an on-board objective monitoring system, a speech information control system, an electric power supply system, external and internal lighting facilities, a complex emergency escape system, an electronic power plant control system, **characterized in that** an optoelectronic vision-sight system (5) comprises an automatic caging system (31) that fixes orientation of visual fields of a laser radar system (24), a narrow-field thermal vision system (25), a wide-field thermal vision system (26), a TV system (27) when a sight line transits to the upper hemisphere and decages thereof during transition to the lower hemisphere; the optoelectronic vision-sight system (5), receive-radiating units of an on-board radar (4) and a periscopic system (30) for bringing visual fields of the optoelectronic system to the upper hemisphere being mounted in a common fastening device.

2. An aircraft (1) with a multi-purpose integrated electronic complex (3) as claimed in Claim 1, **characterized in that** the periscopic system (30) comprises an on-off deflector subsystem (28) that, in response to a signal of transiting a sight line to the upper hemisphere, automatically cages a lower hemisphere view system of the periscopic system (30) and pushes away of visual fields of the optoelectronic vision-sight system (5) to the upper sight element of the periscopic system (30).

3. An aircraft (1) with a multi-purpose integrated electronic complex (3) as claimed in Claims 1 and 2, **characterized in that** the periscopic system (30) comprises the upper sight element in the form of a deflector (28) fastened in a gimbal suspension (29) for controlling the orientation of visual fields in the upper hemisphere.

4. An aircraft (1) with a multi-purpose integrated electronic complex (3) as claimed in Claims 1-3, **characterized in that** signals of transiting a sight line from the lower hemisphere to the upper hemisphere and from the upper hemisphere to the lower hemisphere come from the output of the on-board digital computers (19) of said information control system to the input of said on-off deflector subsystem (28).

5. An aircraft (1) with a multi-purpose integrated electronic complex (3) as claimed in Claims 1-4, **characterized in that** signals of controlling the orientation of visual fields of the optoelectronic system (5) come from the output of the on-board digital computer (19) of said information control system to drives of a sight element of the optoelectronic system (5) for viewing the lower hemisphere and to drives of the upper sight element of the periscopic system (30).

## Patentansprüche

1. Flugzeug (1) mit verbesserten Manövriereigenschaften, umfassend einen Rumpf, einen Flügel, einen Ruderaufbau, eine Fahrwerk, ein Triebwerk, eine integrierte Mehrzweck-Elektronikanlage (3), enthaltend ein Informationsaustauschsystem, einen Satz von bordseitigen Digitalcomputern (19) zur Steuerung von Flug und Training und Kampfhandlungen, einen externen Speicher und ein Informationseingabesystem, ein Funkträgheitsnavigations- und -landesystem, ein komplexes Flugzeugsteuersystem, ein Waffensteuersystem, ein komplexes System zur elektronischen Anzeige, Steuerung und zum Zielen, eine Notfallwarntafel, ein Universalflugzeugausrüstungssteuersystem, ein bordseitiges objektives Überwachungssystem, ein Sprachinformationssteuersystem, ein Versorgungssystem für elektrische Energie, Außen- und Innen-Lichtanlagen, ein komplexes Notfall-Rettungssystem, ein elektronisches Triebwerksteuersystem, **dadurch gekennzeichnet, dass** ein optoelektronisches Sicht-Zielsystem (5) ein automatisches Feststellsystem (31) umfasst, das die Orientierung der Sichtfelder eines Laserradarsystems (24), eines Wärmebildsystems mit kleinem Blickwinkel (25), eines Weitwinkel-Wärmebildsystems (26), eines TV-Systems (27) fixiert, wenn eine Visierlinie in die obere Hemisphäre verlagert wird, und das diese bei der Verlagerung in die untere Hemisphäre freigibt, wobei das optoelektronische Sicht-Zielsystem (5), Empfangs-Abstrahl-Einheiten eines bordseitigen Radars (4) und ein Periskopsystem (30) zur Verlagerung der Sichtfelder des optoelektronischen Systems in die obere Hemisphäre in einer gemeinsamen Befestigungseinrichtung montiert sind.

2. Flugzeug (1) mit integrierter Mehrzweck-Elektronikanlage (3) nach Anspruch 1, **dadurch gekennzeichnet, dass** das Periskopsystem (30) ein An-Aus-Deflektor-Subsystem (28) umfasst, das in Reaktion auf ein Signal der Verlagerung einer Visierlinie in die obere Hemisphäre automatisch ein unteres Hemisphären-Sichtsystem des Periskopsystems (30) feststellt und die Sichtfelder des optoelektronischen Sicht-Zielsystems (5) zum oberen Zielelement des Periskopsystems (30) verschiebt.

3. Flugzeug (1) mit einer integrierten Mehrzweck-Elektronikanlage (3) nach Anspruch 1 und 2, **dadurch gekennzeichnet, dass** das Periskopsystem (30) das obere Zielelement in Form eines Deflektors (28) umfasst, der in einer Kardanaufhängung (29) angebracht ist, um die Orientierung von Sichtfeldern in der oberen Hemisphäre zu steuern.

4. Flugzeug (1) mit einer integrierten Mehrzweck-Elektronikanlage (3) nach Anspruch 1-3, **dadurch gekennzeichnet, dass** Signale der Verlagerung einer Visierlinie von der unteren Hemisphäre zur oberen Hemisphäre und von der oberen Hemisphäre zur unteren Hemisphäre von der Ausgabe der bordseitigen Digitalcomputer (19) des Informationssteuersystem zur Eingabe des An/Aus-Deflektor-Untersystems (28) gelangen.

5. Flugzeug (1) mit integrierter Mehrzweck-Elektronikanlage (3) nach Anspruch 1-4, **dadurch gekennzeichnet, dass** Signale der Steuerung der Orientierung von Sichtfeldern des optoelektronischen Systems (5) von der Ausgabe des bordseitigen Digitalcomputers (19) des Informationssteuersystems in Antriebe eines Zielelements des optoelektronischen Systems (5) zum Betrachten der unteren Hemisphäre und in Antriebe eines oberen Zielelements des Periskopsystems (30) eintreten.

## Revendications

1. Avion (1) présentant des propriétés de manoeuvre améliorées, comprenant un fuselage, une aile, un assemblage d'aileron, un train d'atterrissage, une installation de propulsion, un complexe électronique intégré multi-usages (3) incorporant un système d'échange d'informations, un groupe d'ordinateurs numériques embarqués (19) pour commander des opérations de vol et d'entraînement et de combat, un système de stockage externe et un système d'entrée d'information, un système de navigation et d'atterrissage radio à inertie, un système de commande d'avion complexe, un système de commande d'armement, un système complexe pour l'affichage électronique, la commande et la vision, un panneau d'avertissement d'urgence, un système de commande d'équipements d'avion multi-usages, et un système de surveillance d'objectif embarqué, un système de commande d'informations vocales, un système d'alimentation de puissance électrique, des installations d'éclairage externe et interne, un système d'évacuation d'urgence complexe, un système de commande d'installation de puissance électronique,
**caractérisé en ce qu'**un système de vision optoélectronique (5) comprend un système de confinement automatique (31) qui fixe l'orientation de champs visuels d'un système radar à laser (24), d'un système de vision thermique en champ rapproché (25), d'un système de vision thermique en champ lointain (26), d'un système de télévision (27) quand une ligne de vision transite vers l'hémisphère supérieur et déconfine ceux-ci pendant la transition vers l'hémisphère inférieur ; le système de vision optoélectronique (5), des unités de réception de rayonnement d'un radar embarqué (4) et un système à périscope (30) pour amener des champs de vision du système optoélectronique vers l'hémisphère supérieur, étant montés dans un dispositif de fixation commun.

2. Avion (1) avec un complexe électronique intégré multi-usages (3) selon la revendication 1, **caractérisé en ce que** le système à périscope (30) comprend un sous-système déflecteur marche/arrêt (28) qui, en réponse à un signal de transit d'une ligne de vision vers l'hémisphère supérieur, confine automatiquement un système de vision d'hémisphère inférieur du système à périscope (30) et éloigne les champs de vision du système de vision optoélectronique (5) vers l'élément de vision supérieur du système à périscope (30).

3. Avion (1) avec un complexe électronique intégré multi-usages (3) selon les revendications 1 et 2, **caractérisé en ce que** le système à périscope (30) comprend un élément de vision supérieur sous la forme d'un déflecteur (28) fixé dans une suspension à la cardan (29) pour contrôler l'orientation de champ visuel dans l'hémisphère supérieur.

4. Avion (1) avec un complexe électronique intégré multi-usages (3) selon les revendications 1 à 3, **caractérisé en ce que** des signaux de transit d'une ligne de vision depuis l'hémisphère inférieur vers l'hémisphère supérieur et depuis l'hémisphère supérieur vers l'hémisphère inférieur proviennent de la sortie des ordinateurs numériques embarqués (19) du système de commande d'informations vers l'entrée dudit sous-système déflecteur marche/arrêt (28).

5. Avion (1) avec un complexe électronique intégré multi-usages (3) selon les revendications 1 à 4, **caractérisé en ce que** des signaux pour commander l'orientation des champs visuels du système optoélectronique (5) proviennent de la sortie de l'ordinateur numérique embarqué (19) du système de commande d'informations vers des pilotes d'un élément de vision du système optoélectronique (5) pour voir l'hémisphère inférieur et vers des pilotes de l'élément de vision supérieur du système à périscope (30)
